# NOUVEAU FASCICULE DE BREVET EUROPEEN

(11) **EP 0 197 591 B2**
(45) Date de publication et mention de la décision concernant l'opposition: **03.03.1993**
(45) Mention de la délivrance du brevet: 13.12.1989
(21) Numéro de dépôt: 86200510.5
(22) Date de dépôt: 26.03.1986
(51) Int. Cl.: A61C 1/18, H01R 35/04

(54) **Dispositif de traitement dentaire**
Vorrichtung zur Zahnbehandlung
Dental-treatment device

(30) Priorité: 27.03.1985 FR 8505016; 27.03.1985 FR 8505017; 06.05.1985 FR 8507161; 30.12.1985 FR 8519409
(43) Date de publication de la demande: 15.10.1986
(73) Titulaire: MICRO-MEGA S.A., F-25006 Besancon (FR)
(72) Inventeur: Boinot, Jean-Claude, F-25640 Roulans (FR); Jacoulet, Jean-Paul, F-25000 Besancon (FR); Leonard, Henri, F-25000 Besancon (FR); Lacour, Bernard, F-25000 Besancon (FR)
(74) Mandataire: Jörchel, Dietrich R.A.

(56) Documents cités:
- EP-A- 0 143 985
- WO-A-85/00281
- DD-C- 87 375
- DE-A- 2 425 578
- DE-A- 3 132 995
- DE-A- 3 215 219
- DE-C- 1 068 425
- FR-A- 2 069 241
- FR-A- 2 542 189
- US-A- 1 956 966
- US-A- 2 959 697
- US-A- 3 432 194

## Description

La présente invention se rapporte à un dispositif de traitement dentaire selon le préambule de la revendication 1.

On connaît déjà un dispositif de traitement dentaire de ce type du DE-A 32 15 219. Ce dispositif est équipé d'une ampoule disposée dans un module amoviblement fixé dans l'intérieur de la pièce à main, à son extrémité postérieure, et qui a la fonction d'une pièce porte-ampoule en forme de douille dont le diamètre interne est égal au diamètre interne de la pièce à main, en avant de cette douille, tel que le logement intérieur de la pièce à main dans lequel se loge le nez du micromoteur est prolongé vers l'arrière par cette pièce porte-ampoule qui entoure directement ce nez, avec un jeu minimum. A l'état monté, cette pièce porte-ampoule est solidaire en rotation de la pièce à main et insérée, dans une position déterminée, dans sa région postérieure. Cette ampoule transmet, par l'intermédiaire de fibres de verre, la lumière vers l'avant. Cette pièce porte-ampoule est pourvue sur sa face postérieure de pistes électriques annulaires qui, dans l'état accouplé de la pièce à main et du micromoteur, sont en contact avec des contacts électriques fixés à l'extrémité antérieure du micromoteur.

On connaît aussi des dispositifs de traitement dentaire de ce type, par exemple, de EP-A 143 985 (fig. 7 à 9). Ce dispositif comprend, outre la pièce à main proprement dite et l'embout dans la forme d'un micromoteur, une pièce porte-ampoule destinée à recevoir une ampoule électrique dont les lamelles élastiques de maintien sont prolongées pour former, avec leurs extrémités pliées, les contacts électriques qui coopèrent avec les pistes électriques annulaires concentriques du module ; celui-ci constitue un élément fixe du boîtier du micromoteur. Cette pièce porte-ampoule peut être fixée rotativement sur le nez du micromoteur en forme du tube fixé au boîtier du micromoteur et entourant son arbre. Dans ce montage, les pistes électriques annulaires du module forment avec les contacts électriques de la pièce porte-ampoule une liaison électrique glissante lors de la rotation de cette pièce par rapport au micromoteur. Lors de l'accrochage de la pièce à main à la pièce porte-ampoule, des rampes conjugées prévues dans ces deux pièces, assurent un alignement entre la position de l'ampoule et l'extrémité postérieure des fibres de verre prévues dans la pièce à main qui transmettent la lumière à l'extrémité antérieure de celle-ci pour illuminer l'emplacement de travail.

Donc, ce dispositif de traitement dentaire fonctionne de manière que, lorsque le dentiste sépare le micromoteur de la pièce à main pour changer celle-ci, la séparation s'effectue entre la pièce porte-ampoule contenant l'ampoule et la pièce à main proprement dite, pendant que la liaison électrique glissante reste accouplée. Cette liaison électrique est seulement déconnectée lors du démontage de la pièce porte-ampoule pour remplacer ladite ampoule. Dans ce dispositif connu, le raccord tournant comprend des lamelles élastiques formées par pliage; un raccord de ce type est donc strictement limité à une liaison électrique ne devant pas être connectée et déconnectée d'une manière très fréquente. En effet, les lamelles élastiques minces sont très fréquente. En effet, les lamelles élastiques minces sont très fragiles et peuvent se détériorer rapidement. En outre, un nettoyage au niveau de ces lamelles pourrait entraîner leur déformation ce qui aurait pour conséquence soit un contact médiocre, soit des risques de court-circuits.

Un raccord tournant comme mentionné est déjà connu en soi, par exemple du brevet US No 3,432,194, selon lequel le micromoteur est accouplé à la pièce à main de manière que les deux éléments peuvent tourner librement l'un par rapport à l'autre. Pour cela, on a prévu sur le nez du micromoteur un ergot à ressort escamotable destiné à pénétrer dans une rainure interne de la pièce à main pour réaliser ce raccord tournant. Cet accouplement est facile à manipuler, évite un prépositionnement relatif des éléments et, surtout, facilite les manipulations de la pièce à main par le dentiste.

On a de plus en plus tendance à équiper les pièces à main actuelles, en particular les contre-angles, de moyens d'éclairage de l'emplacement de travail dans la bouche du patient où la source de lumière se trouve directement dans la tête du contre-angle, en renonçant à une transmission de la lumière par des fibres de verre.

Une telle pièce à main qui porte une ampoule dans sa tête est connue du DE-C-1 068 425, pour le cas d'un wrist (Gelenk-Gleitverbindung), donc un entraînement par poulie et courroie; la source de courant consistant en une batterie ou une dynamo est incorporée dans le wrist en avant ou en arrière de la poulie. La transmission du courant se fait par des contacts prévus sur le wrist et des pistes électriques annulaires sur la face postérieure de la pièce à main. Cependant, le raccord qui forme ce wrist n'est pas tournant.

La présent invention se propose de créer un dispositif de traitement dentaire tel que mentionné, muni d'une source de lumière dans la pièce à main et comportant une liaison électrique facile à connecter ou déconnecter lors de l'accrochage, respectivement du décrochage des pièces, qui ne gêne pas la libre rotation des pièces l'une par rapport à l'autre, qui puisse résister sans dommages aux fréquents nettoyages et démontages de la pièce à main, et qui est conçu de telle manière que le praticien peut, le cas échéant, utiliser également la pièce à main avec un micromoteur normalisé en renonçant à utiliser les moyens d'illumination.

En outre, l'invention se propose de rendre disponible un module avec des pistes électriques annulaires, de fabrication simple, et dont le montage et, le cas échéant, le remplacement des pistes doit pouvoir se faire facilement.

Pour résoudre ce problème, le dispositif de traitement dentaire selon l'invention est caractérisé par la clause caractérisante de la revendication 1.

Les avantages obtenus grâce à la configuration des contacts sont que l'on diminue les risques de détérioration de ces contacts lors du nettoyage et de l'utilisation et que l'on diminue également les risques en cas d'essai d'adaptation intempestif par l'utilisa- teurde la pièce à main sur un micromoteur non équipé de manière adéquate. En outre, la configuration avec un module monté amoviblement sur la pièce à main est robuste, d'une fabrication facile, avec un montage et un démontage pratique permettant, le cas échéant le remplacement des pistes.

La liaison électrique ainsi réalisée est universelle et permet une compatibilité entre des éléments , pièces à main et micromoteurs, de différentes origines. Par ailleurs, cette liaison électrique peut être connectée et déconnectée facilement de nombreuses fois dans la journée, soumise aux matières provenant du travail du dentiste et être nettoyée régulièrementsans risque de détérioration.

Enfin, cette configuration, avec module sur pièce à main, est également avantageuse pour une autre raison, à savoir, dans le cas où le praticien voudrait utiliser cette pièce à main avec un micromoteur normalisé qui n'a pas de contact pour la liaison électrique des ampoules de la pièce à main, donc en renonçant d'utiliser les moyens d'illumination ; il ne le pourrait pas, à cause de la surépaisseur créée par les pistes électriques annulaires, qui augmente la distance entre la rainure du raccord tournant et la face postérieure de la pièce à main. Avec le dispositif selon l'invention, on peut simplement enlever le module.

Donc, avec ce module amovible on crée une pièce à main, notamment un contre-angle, qui peut être utilisée soit avec un micromoteur spécial équipé de contacts électriques, soit avec un micromoteur normalisé.

Il est préférable que les contacts à piston débouchent sur l'extrémité antérieure du micro-moteur dans le fond d'une gorge annulaire dans laquelle s'encastrent les pistes électriques annulaires prévues sur la pièce à main, les pistons étant plus courts que la paroi extérieure qui entoure la gorge.

Cette forme d'exécution est particulièrement avantageuse car elle permet une protection des pistons de contact contre des risques d'endommagement mécaniques lors de la manipulation du micro- moteur, quand on le pose par exemple sur sa face antérieure.

Préférablement, les moyens pour fixer amoviblement le module à la pièce à main sont constitués par un écrou. Des formes d'exécution préférées résultent des revendications dépendantes.

L'invention sera décrite dans la description qui suit de plusieurs formes d'exécution du dispositif, au moyen du dessin annexé, dans lequel:
La figure 1 est une vue en coupe axiale de l'extrémité postérieure de la pièce à main, sur laquelle est fixé le module muni des pistes électriques et dans laquelle le nez du micromoteur spécial est partiellement introduit.
La figure 2 montre, en coupe axiale, l'extrémité postérieure de la pièce à main sur laquelle est fixée une deuxième forme d'exécution du module.
La figure 3 montre le module de la deuxième forme d'exécution, seul, selon une autre coupe axiale.
La figure 4 montre, en coupe axiale, l'extrémité postérieure de la pièce à main, sans le module, et dans laquelle est introduit le nez d'un micromoteur normalisé.
La figure 5 est une vue en coupe axiale, de l'extrémité postérieure d'une pièce à main sur laquelle est fixée une troisième forme d'exécution du module.
La figure 5a est un détail des moyens de fixation de la troisième forme d'exécution.
La figure 6 est une vue, en coupe axiale, de l'extrémité postérieure d'une pièce à main sur laquelle est fixée une quatrième forme d'exécution du module.
La figure 6a est une vue partielle de la languette selon la coupe Vla.
La figure 7 est une vue en coupe axiale de l'extrémité postérieure d'une pièce à main sur laquelle est fixée une cinquième forme d'exécution du module.
Les figures 7a et 7b sont des vues selon l'axe Vlla-Vlla et Vllb-Vllb de la figure 7 avec la bague en position verrouillée, respectivement déverrouillée.

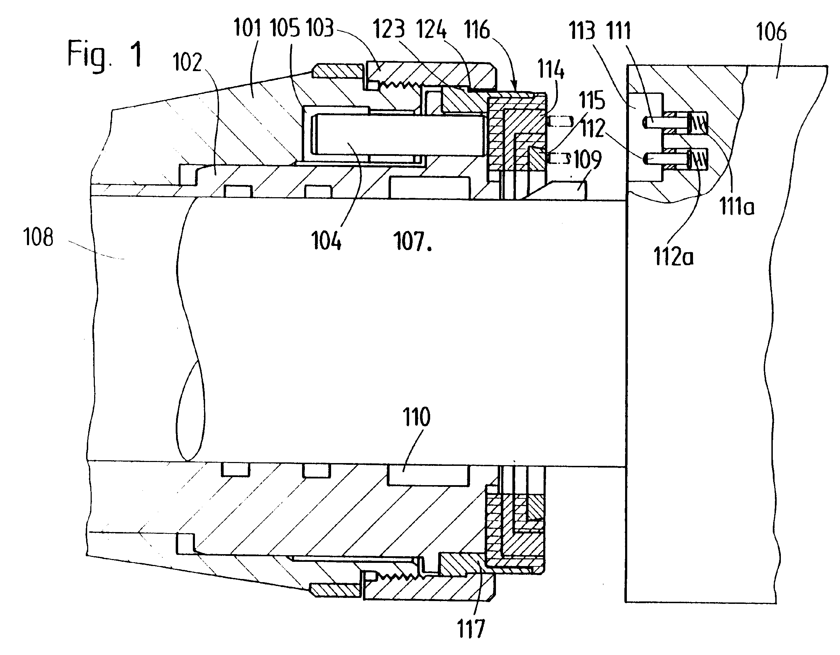

La pièce à main dont seule l'extrémité postérieure est représentée sur l'ensemble de ces figures 1 à 7, se compose d'une douille externe 101 dans laquelle est emboitée une douille interne 102, les deux douilles étant fixées l'une à l'autre par l'intermédiaire d'un écrou 103 vissé sur la douille externe 101. Le positionnement entre les deux douilles 101 et 102 est assuré par une goupille 104 chassée dans la douille interne 102 et pénétrant dans une encoche 105 de la douille externe 101. Cette pièce à main est conçue pour fonctionner avec un micromoteur 106 muni d'un nez 107 qui s'ajuste dans l'alésage 108 de la douille interne 102. Sur le nez 107 est prévu un ergot à ressort 109 qui s'escamotte lors de l'accouplement et qui s'enclenche dans une rainure 110 prévue dans la douille interne 102 réalisant ainsi un accouplement tournant entre les deux pièces.

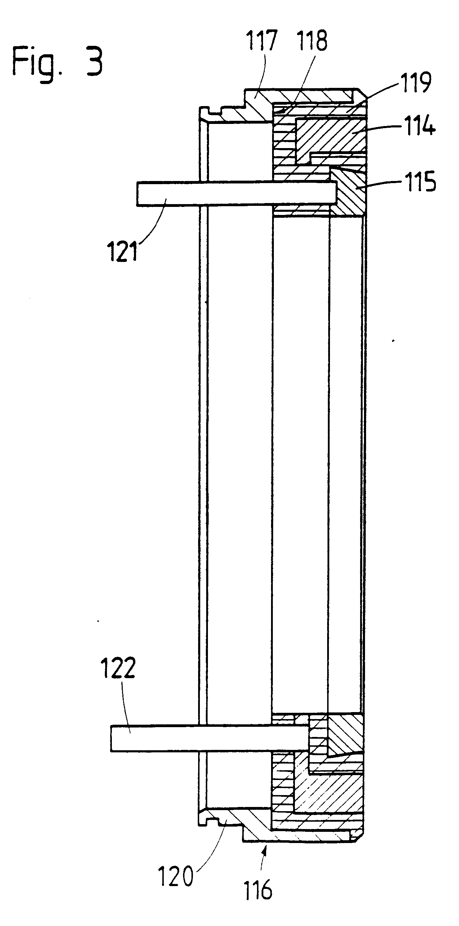

Selon la figure 1, le micromoteur 106 est muni de pistons de contact 111, 112, soumis à l'action de ressorts 111a, 112a, pour alimenter un dispositif d'illumination du plan de travail, prévu à l'extrémité antérieure de la pièce à main. Ces pistons de contacts 111, 112 sont situés dans le fond d'une gorge annulaire 113 formée sur la face antérieure du micromoteur, comme illustré figure 1. Ces pistons 111, 112 sont destinés à entrer en contact, lorsque la pièce à main est montée sur le micromoteur, avec des pistes électriques annulaires concentriques 114, 115 montées dans un module 116 qui se fixe amoviblement à l'extrémité postérieure de la pièce à main. Ce modèle 116, illustré séparément figure 3, est constitué par une bague 117 munie d'une embase interne 118 dans laquelle est encastrée une pièce 119 en matière plastique isolante, surmoulée autour des pistes électriques annulaires 114, 115. Ces pistes 114, 115 affleurent sur la face extérieure de la pièce 119 et sur l'autre côté ils sont soudés à des fiches 121, 122 qui font contact avec les conducteurs, non représentés, amenant le courant au dispositif d'éclairage.

Différentes formes d'exécution des moyens de fixation du module sur la pièce à main peuvent être envisagées.

Selon une première forme d'exécution, illustrée figure 1, ces moyens de fixation sont constitués par un épaulement 123 formé extérieurement sur l'extrémité libre de la bague 117 et qui coopère avec un épaulement 124 formé à l'intérieur de l'écrou 103. Le vissage de l'écrou 103 sur la pièce à main assure le verrouillage du module 116 sur ladite pièce à main.

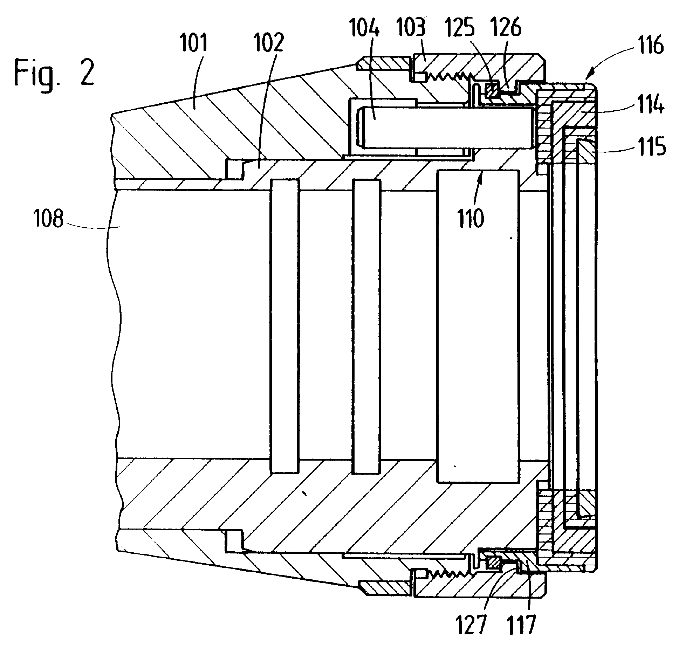

Sur la figure 2 est illustrée une deuxième forme d'exécution des moyens de fixation du module 116 constitués, dans ce cas, par un circlips 125 fixé à l'extrémité libre de la bague 117 et l'écrou est muni d'une embase 126 qui l'emprisonne entre le circlips 125 et un épaulement 127 de la bague 117. En vissant l'écrou 103 sur la douille extérieure 101 de la pièce à main, le module 116 se trouve bloqué sur la pièce à main par appui de l'embase 126 contre le circlips 125 tandis qu'en dévissant l'écrou 103, le module 116 est déverrouillé et poussé vers l'arrière par l'appui de l'embase 126 contre l'épaulement 127.

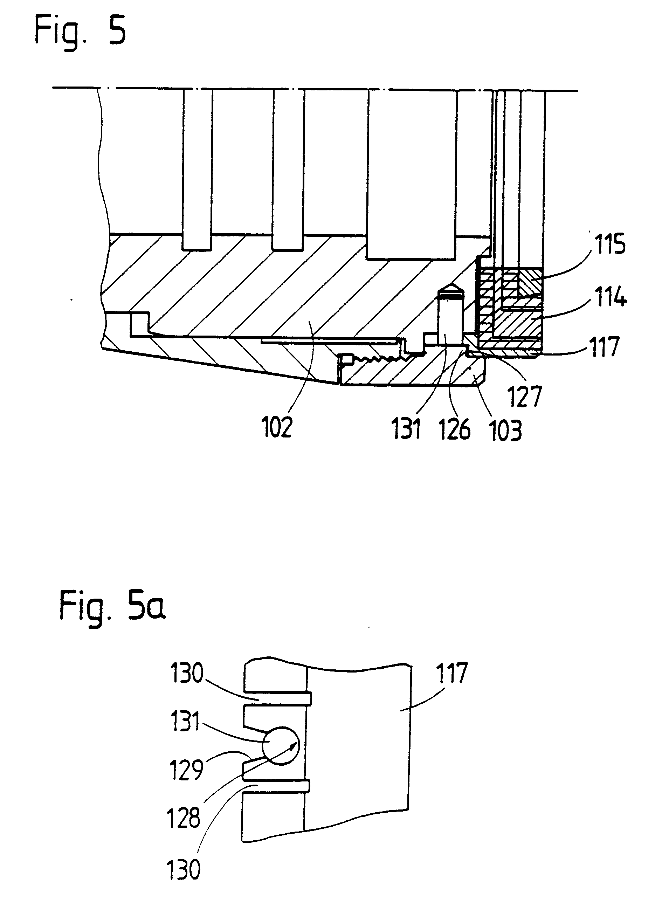

Selon une troisième forme d'exécution des moyens de fixation du module 116, illustrée figures 5 et 5a, la bague 117 est munie d'une encoche circulaire 128 débouchant par une fente 129 sur l'extrémité libre de la bague, des fentes 130 étant de préférence prévues de part et d'autre de cette encoche pour accroître l'élasticité du dispositif. Cette encoche 128 est prévue pour recevoir une goupille 131 chassée dans la douille interne 102 de la pièce à main. Il peut être prévu plusieurs goupilles 131 sur la douille 102 et plusieurs encoches 128 sur la bague 117.

Comme dans la forme d'exécution précédente, l'écrou 103 est muni d'une embase 126 contre laquelle s'appuie un épaulement 127 de la bague 117 et pour extraire le module 116, il suffit de dévisser l'écrou 103 qui pousse la bague 117 vers l'extérieur et désengage la goupille 131 de l'encoche 128.

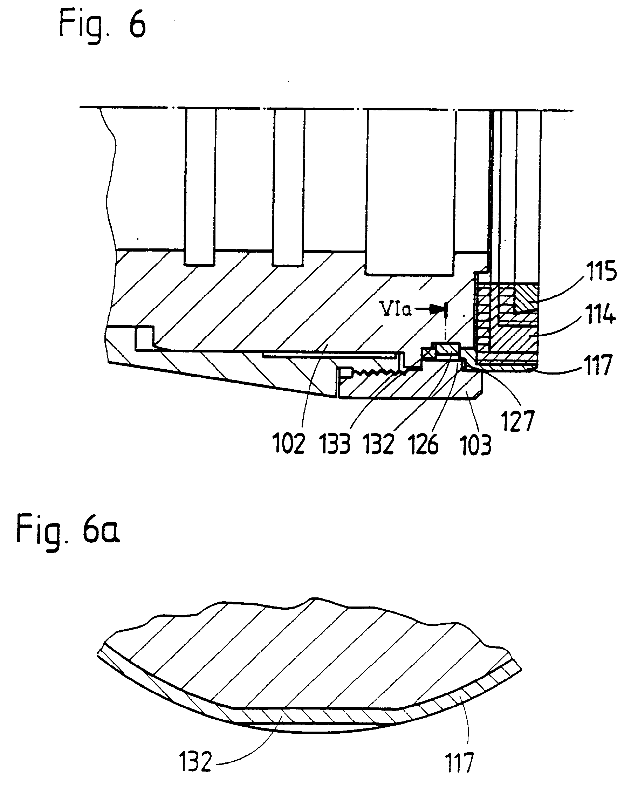

Selon une quatrième forme d'exécution, illustrée figures 6 et 6a, la bague 117, dans sa partie cylindrique recouvrant la douille interne 102, comporte trois languettes élastiques 132 découpées radialement, également espacées à la périphérie de la bague 117, et qui sont déformées vers l'intérieur comme illustré figure 6a. Ces languettes 132 pénètrent, en position de verrouillage, dans des encoches appropriées 133 prévues sur la douille interne 102. Ainsi, dans ces encoches 133 les languettes 132 font effet de circlips verrouillant tout déplacement longitudinal du module 116. La bague 117 est fabriquée en métal ayant une bonne élasticité afin d'accepter des déformations momentanées et de reprendre sa forme initiale comme un ressort. Pour enlever le module 116 de la pièce à main il suffit de faire tourner la bague 117jusqu'à ce que les languettes 132 se dégagent des encoches 133 et libèrent la bague 117. Le module qui peut alors être extrait de la pièce à main, par exemple en dévissant l'écrou 103 lequel, comme dans les exemples précédents, est muni d'une embase 126 qui s'appuie entre un épaulement 127 de la bague 117.

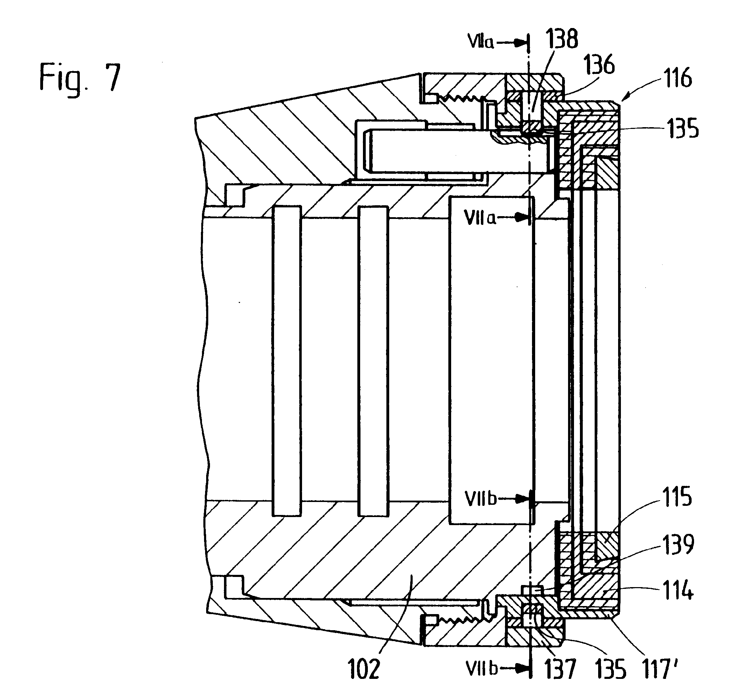

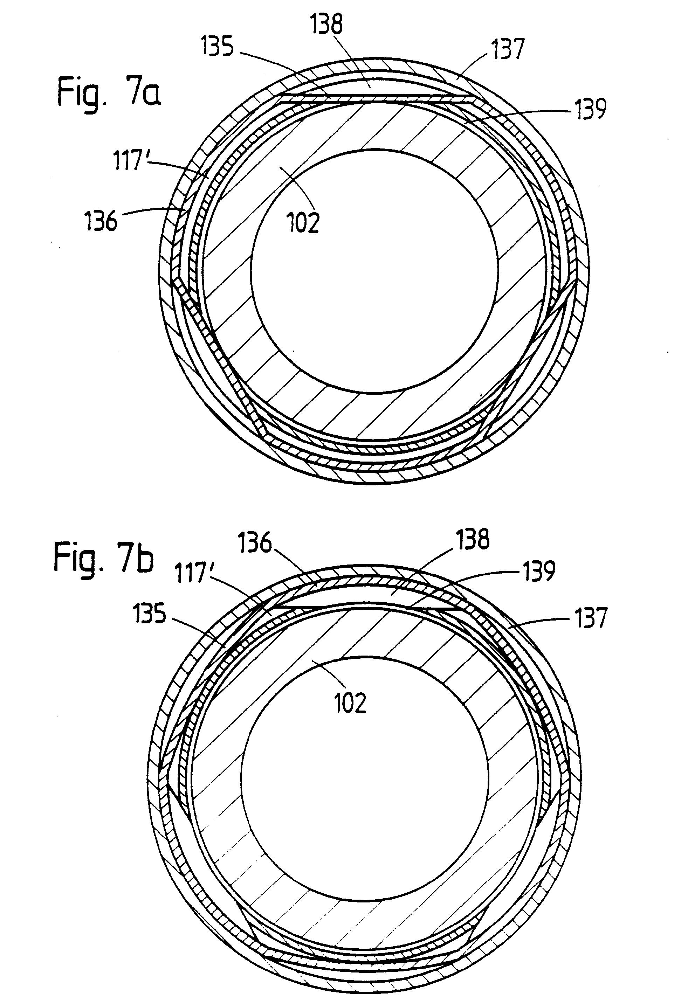

Une autre version de ces moyens de fixation est illustrée figures 7, 7a et 7b. Dans ce cas, les languettes 135 sont découpées dans une bague intermédiaire 136 elle-même fixée à une bague extérieure 137, les deux bagues 136, 137 pouvant tourner sur la bague 117' du module 116. Cette bague 117' est munie de lumières 138 au travers desquelles passent, en position de verrouillage illustrée figure 7a, les languettes 135 pour pénétrer dans une rainure 139 de la douille 102.

Pour déverrouiller le module 116, il suffit de tourner la bague extérieure 137 jusqu'à ce que les languettes 135 sortent des encoches 138, comme illustré figure 7b. Le dévissage de l'écrou 103 permet également de pousser le module 116 vers l'extérieur.

Il serait également possible dans les deux dernières formes d'exécution décrites, de limiter la rotation des bagues dans les deux sens.

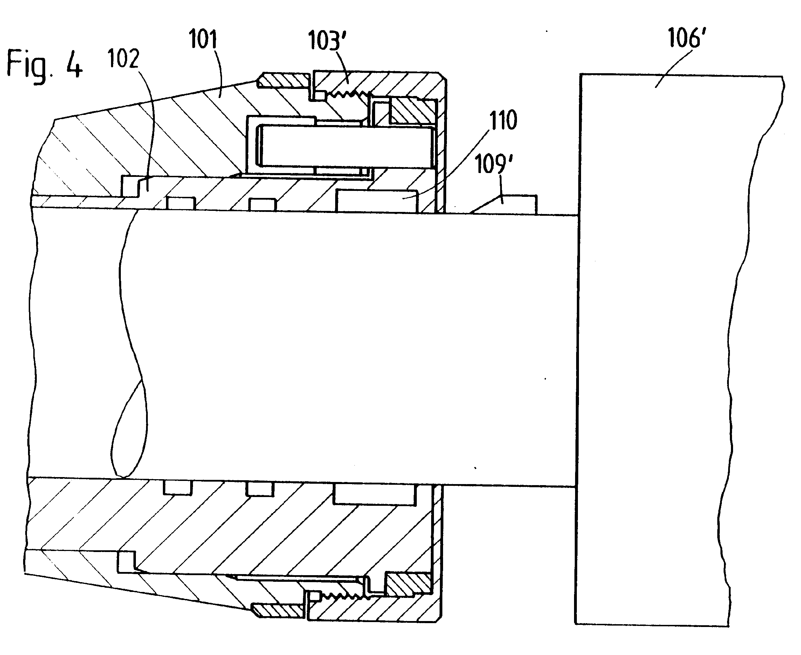

Une fois le module 116 enlevé, il est possible d'utiliser la pièce à main avec un micromoteur normalisé 106' comme illustré figure 4. Dans ce cas, l'écrou 103 est remplacé par un écrou-bouchon 103' et le micromoteur 106' peut être fixé normalement à la pièce à main par le système ergot 109' et rainure 110.

D'autres modes de fixation du module dans la pièce à main peuvent naturellement être envisagés sans sortir du cadre de l'invention. Bien entendu, on peut inverser l'endroit où le module sera fixé, à savoir, il pourrait aussi être fixé à l'embout, et les pistons prévus sur la pièce à main.

## Revendications

1. Dispositif de traitement dentaire comprenant une pièce à main (101, 102) dans laquelle se loge l'instrument de traitement, une source de lumière pour illuminer l'emplacement de travail, un embout dans la forme d'un micromoteur (106), comportant un nez (107) s'engageant dans la pièce à main, pour l'entraînement de l'instrument de traitement, ladite pièce à main et ledit micro- moteur étant accouplés par un raccord tournant (109, 110) permettant un décrochage de ces deux pièces, que ledit raccord tournant (109) comporte un crochet à ressort escamotable saillant dudit nez (107) et un module (116) en forme de bague amoviblementfixée à l'extrémité postérieure de la pièce à main (101, 102) en encerclant à distance ledit nez, ledit module ayant deux pistes électriques annulaires concentriques (114, 115) isolées l'une de l'autre, contre lesquelles s'appliquent dans la position montée du module, pour alimenter ladite source de lumière depuis le micromoteur, deux contacts électriques (111, 112) à pistons parallèles à l'axe, saillants sur la face antérieure du micromoteur (106) et pressés sur les pistes électriques (114, 115) sous l'action de ressorts (111a, 112a) afin que la séparation lors du décrochage de la pièce à main et du micromoteur s'effectue entre ledit module (116) et le micromoteur, ces contacts à piston (111, 112) et lesdites pistes électriques (114, 115) formant une liaison électrique déconnectable lors du décrochage de ladite pièce à main et dudit micromoteur, caractérisé en ce
- que cette bague est amoviblement fixée sur la face postérieure de ladite pièce à main (101, 102),
- que ledit crochet à ressort escamotable (109) pénètre dans une rainure interne (110) formée dans ladite pièce à main (101,102) qui contient ladite source de lumière à son extrémité antérieure,
- que sur l'autre coté, lesdites pistes électriques (114, 115) sont soudées à des fiches (121,122) qui font un contact amovible avec les conducteurs amenant le courant à ladite source de lumière, et
- que la pièce à main (101,102) peut être accouplée par ledit raccord tournant soit à un micromoteur spécial (106) équipé de contacts électriques en présence du module, soit à un micro-moteur normalisé (106') en l'absence du module.

2. Dispositif selon la revendication 1, caractérisé par le fait que ledit module amovible (116) est constitué par une bague métallique (117) munie d'une embase interne (118) dans laquelle est encastrée une pièce (119) en matière plastique isolante, surmoulée autour des pistes électriques annulaires (114,115) et que l'extrémité libre de la bague est prévue pour s'emboîter dans ladite pièce à main (101, 102).

3. Dispositif selon la revendication 2, dans lequel la pièce à main est constituée d'une douille interne (102) emboîtée dans une douille externe (101), les deux douilles étant solidarisées par un écrou (103) vissé sur la douille extérieure (101), caractérisé par le fait que le module (116) est montable sur la pièce à main et que les moyens de fixation sont constitués par un épaulement (123) sur la périphérie extérieure de la bague (117) qui coopère avec un épaulement interne (124) sur ledit écrou (103).

4. Dispositif selon la revendication 2, dans lequel la pièce à main est constituée d'une douille interne (102) emboîtée dans une douille externe (101), les deux douilles étant solidarisées par un écrou (103) vissé sur la douille extérieure (101), caractérisé par le fait que le module (116) est montable sur la pièce à main et que ledit écrou (103) est muni d'un épaulement interne (126) qui coopère avec un épaulement externe (127) de la bague (117) pour désolidariser axialement le module et la pièce à main, par dévissage de l'écrou (103), et que lesdits moyens de fixation sont constitués par un circlips (125) monté sur la périphérie extérieure de la bague (117).

5. Dispositif selon la revendication 4, caractérisé par le fait que lesdits moyens de fixation sont constitués par au moins une encoche (128), préférablement trois, formée à l'extrémité libre de la bague (117) et qui coopère avec au moins une goupille (131) chassée à la périphérie de la douille interne (102) de la pièce à main.

6. Dispositif selon la revendication 4, caractérisé par le fait que lesdits moyens de fixation sont constitués par au moins une languette élastique (132), préférablement trois, découpée radialement dans l'extrémité libre de la bague (117) et déformée vers l'intérieur, ladite languette (132) pénétrant, en position de verrouillage, dans une encoche appropriée (133) prévue sur la périphérie extérieure de la douille interne (102) de la pièce à main, une rotation de la bague (117) permettant de dégager la languette (132) de l'encoche (133) et donc de déverrouiller le module (116) de la pièce à main.

7. Dispositif selon la revendication 4, caractérisé par le fait que lesdits moyens de fixation sont constitués par au moins une languette élastique (135) déformée vers l'intérieur, découpée radialement dans une bague intermédiaire (136) montée sur l'extrémité libre de la bague (117') du module (116), cette bague intermédiaire (136) étant elle-même fixée à une bague extérieure (137) pouvant tourner sur la bague (117') du module tel que, en position de verrouillage, la languette élastique (135) pénètre à travers une lumière (138) de la bague du module dans un logement approprié (139) prévu sur la pièce à main et qu'une rotation de la bague extérieure (137) sur la bague du module entraîne le dégagement de la languette élastique (135) du logement (139), et donc le déverrouillage des deux pièces.

8. Dispositif selon l'une des revendications précédentes, caractérisé en ce que les contacts à pistons (111, 112) débouchent sur la face antérieure du micromoteur (106) dans le fond d'une gorge annulaire (113) dans laquelle s'encastrent les pistes électriques annulaires (114, 115) dans l'état accouple, la partie des pistons de contact dépassant du fond de la gorge étant plus courte que la paroi d'extrémité qui forme la périphérie extérieure de la gorge.

## Claims

1. A dental treatment device comprising a handpiece (101, 102), in which the treatment instrument is lodged, a light source for illuminating the work area, a socket in the form of a micromotor (106) having a nose (107) engaging the handpiece for driving the treatment instrument, said handpiece and said micromotor being coupled by a rotating connection (109, 110) permitting of detaching these two pieces, said rotating connection (109) comprising a retractable spring-loaded hook projecting from said nose (107), and a module (116) in the form of a ring removably fixed to the rear end of the handpiece (101, 102) and surrounding said nose spaced from said nose, said module having two concentric annular electrical tracks (114, 115) insulated from each other and which, in the assembled condition of the module, are engaged by two piston-like electrical contacts (111, 112) for feeding said light source from the micromotor, said two piston-like electrical contacts being parallel to the axis, projecting on the front face of the micromotor (106) and are pressed against the electrical tracks (114, 115) under the action of springs (111a, 112a) in orderthatthe separation of the handpiece and of the micromotor, when these pieces are disconnected, takes place between said module (116) and the micromotor, said piston-like contacts (111, 112) and said electrical tracks (114, 115) form an electrical connection that is separated when said handpiece and said micromotor are disconnected, characterised by the fact
- that said ring is removably fixed on the rear face of said handpiece (101, 102),
- that said retractable spring loaded hook (109) engages an inner groove (110) formed in said handpiece (101, 102) that comprises said light source at its front end.
- that said electrical tracks (114, 115) have their other side welded to plugs (121, 122) which make a detachable contact with lead wires supplying electric current to said light source, and
- that the handpiece (101, 102) can be coupled by said rotating connection either with a special micromotor (106) provided with electric contacts when the module is present, or with a standard micromotor (106') when the module is absent.

2. A device according to claim 1, characterised by the fact that said removable module (116) consists of a metal ring (117) having an internal seat (118) in which an insulating plastic body (119) is fitted, said insulating plastic body having the annular electrical tracks (114, 115) embedded therein by molding, and that the free end of the ring is adapted to fit in said handpiece (101, 102)

3. A device according to claim 2, wherein the handpiece consists of an inner sleeve (102) fitted in an external sleeve (101), both sleeves being assembled by means of a nut (103) screwed on said external sleeve (101), characterised bythefactthat the module (116) is adapted to be counted on the handpiece and that the fixing means consist of a shoulder (123) formed on the outer periphery of said ring (117) which cooperates with an inner shoulder (124) of said nut (103).

4. A device according to claim 2, wherein said handpiece consists of an inner sleeve (102) fitted in an external sleeve (101), both sleeves being assembled by means of a nut (103) screwed on said external sleeve (101), characterised bythefactthat the module (116) is adapted to be mounted on the handpiece and that said nut (103) is provided with an inner shoulder (126) cooperating with an external shoulder (127) of said ring (117) for axially uncoupling said module and handpiece by unscrewing said nut (103), and that said fixing means consist of a circlip (125) mounted on the outer periphery of said ring (117)

5. A device according to claim 4, characterised by the fact that said fixing means consist of at least one notch (128), preferably of three notches, formed at the free end of said ring (117) and adapted to cooperate with at least one pin (131) driven in the peripheral portion of the inner sleeve (101) of said hadpiece.

6. A device according to claim 4, characterised by the fact that said fixing means consist of at least one resilient tongue (132), preferably three resilient tongues, cut radially in the free end of said ring (117) and bent inwardly, said tongue, in the locking position, engaging a suitable notch (133) formed in the outer periphery of said inner sleeve (102) of said handpiece, whereby rotating said ring (117) will permit of releasing said tongue (132) from said notch (133) and consequently of releasing said module (116) from said handpiece.

7. A device according to claim 4, characterised by the fact that said fixing means consist of at least on resilient tongue (135) bent inwardly and cut radially in an intermediate ring (136) mounted on the free end of the ring (117) of said module (116), said intermediate ring (136) being secured in turn to an external ring (137) adapted to rotate on said module ring (117) such that, in the locked position, said resilient tongue (135) will engage, through an aperture (138) formed in said module ring, a suitable recess (139) formed on said handpiece, and that rotating said external ring (137) on said module ring will cause said resilient tongue (135) to be released from said recess (139) and thus uncouple the two pieces.

8. A device according to one of the preceding claims, characterised by the fact that said piston-like contacts (111, 112) emerge from the front face of said micromotor (106) in the bottom of an annular recess (113) into which said annularelec- trical tracks (114, 115) are adapted to be fitted in the coupled condition, the portion of said piston-like contacts that protrudes from the bottom of said recess being shorter than the end wall constituting the outer periphery of said recess.

## Patentansprüche

1. Vorrichtung zur Zahnbehandlung mit einem Handstück (101, 102), in welches das Behandlungsinstrument eingesetzt ist, mit einer Lichtquelle zum Beleuchten der Behandlungsstelle, mit einem Anschlussteil in Form eines Mikromotors (106), der eine in das Handstück eingreifende Nase (107) aufweist, zum Antreiben des Behandlungsinstruments, wobei das erwähnte Handstück und der erwähnte Mikromotor durch eine Drehverbindung (109, 110) miteinander gekuppelt sind, welche das Trennen dieser beiden Teile erlaubt und welche einen an der Nase (107) vorstehenden, federbelasteten versenkbaren Haken aufweist, und mit einem Modul (116) in Form eines am hinteren Ende des Handstücks (101, 102) abnehmbar befestigten und die erwähnte Nase mit Abstand umgebenden Rings, wobei der erwähnte Modul zwei konzentrische, ringförmige elektrische Kontaktbahnen (114, 115) hat, die voneinander isoliert sind und gegen welche in der montierten Stellung des Moduls zwecks Speisung der erwähnten Lichtquelle vom Mikromotor aus zwei elektrische, kolbenartige Kontakte (111,112) anliegen, die parallel zur Achse gerichtet sind, an der Vorderseite des Mikromotors (106) vorstehen und unter der Wirkung von Federn (111a, 112a) gegen die elektrischen Kontaktbahnen (114, 115) gedrückt werden, damit die Trennung beim Entkuppeln des Handstücks und des Mikromotors zwischen dem erwähnten Modul (116) und dem Mikromotor stattfindet, wobei diese kolbenartigen Kontakte (111, 112) und die erwähnten elektrischen Kontaktbahnen (114, 115) eine beim Entkuppeln des erwähnten Handstücks und des erwähnten Mikromotors trennbare elektrische Verbindung bilden, dadurch gekennzeichnet,
- dass dieser Ring abnehmbar auf der rückwärtigen Seite des erwähnten Handstücks (101, 102) befestigt ist,
- dass der erwähnte federbelastete versenkbare Haken (109) in eine innere Nut (110) eingreift, die in dem erwähnten Handstück (101, 102) geformt ist, welches die erwähnte Lichtquelle an ihrem vorderen Ende enthält,
- dass die elektrischen Kontaktbahnen (114, 115) auf der anderen Seite an Steckern (121, 122) angeschweisst sind, welche einen abnehmbaren Kontakt mit den den Strom zur erwähnten Lichtquelle führenden Leitern bilden, und
- dass das Handstück (101, 102) durch die erwähnte Drehverbindung bei Gegenwart des Moduls mit einem mit elektrischen Kontakten ausgerüsteten speziellen Mikromotor (106) oder bei Abwesenheit des Moduls mit einem normalisierten Mikromotor (106') gekuppelt werden kann.

2. Vorrichtung nach Anspruch 1, dadurch gekennzeichnet, dass der abnehmbare Modul (116) aus einem metallischen Ring (117) mit einem inneren Ansatz (118) besteht, in welchem ein isolierender Kunststoffeinsatz (119) eingefügt ist, der die ringförmigen elektrischen Kontaktbahnen (114, 115) umgibt, und dass das freie Ende des Rings in das erwähnte Handstück (101, 102) einschiebbar ist.

3. Vorrichtung nach Anspruch 2, bei welcher das Handstück eine Innenhülse (102) aufweist, die in eine Aussenhülse (101) eingesetzt ist, wobei beide Hülsen durch eine auf die Aussenhülse (101) geschraubte Mutter (103) miteinander befestigt sind, dadurch gekennzeichnet, dass der Modul (116) am Handstück montierbar ist und dass die Mittel zur Befestigung aus einer auf dem Aussenumfang des Rings (117) vorgesehenen Schulter (123) bestehen, welche mit einer Innenschulter (124) der erwähnten Mutter (103) zusammenwirkt.

4. Vorrichtung nach Anspruch 2, bei welcher das Handstück eine Innenhülse (102) aufweist, die in eine Aussenhülse (101) eingesetzt ist, wobei beide Hülsen durch eine auf die Aussenhülse (101) geschraubte Mutter(103) miteinander verbunden sind, dadurch gekennzeichnet, dass der Modul (116) am Handstück montierbar ist und dass die erwähnte Mutter (103) mit einer Innenschulter (126) versehen ist, welche mit einerAussenschulter (127) des Rings (117) zusammenwirkt, um Modul und Handstück durch Abschrauben der Mutter (103) axial voneinander zu trennen, und dass die erwähnten mittel zur Befestigung aus einem Sicherungsring (125) bestehen, der auf dem Aussenumfang des Rings (117) sitzt.

5. Vorrichtung nach Anspruch 4, dadurch gekennzeichnet, dass die Mittel zur Befestigung wenigstens eine Aussparung (128), vorzugsweise drei Aussparungen, aufweisen, welche am freien Ende des Rings (117) vorgesehen ist und die mitwenigstens einem Stift (131) zusammenwirkt, der am Umfang der Innenhülse (102) des Handstücks eingetrieben ist.

6. Vorrichtung nach Anspruch 4, dadurch gekennzeichnet, dass die erwähnten Mittel zur Befestigung wenigstens eine elastische Zunge (132), vorzugsweise drei Zungen, aufweisen, die radial am freien Ende des Rings (117) ausgeschnitten und nach innen verformt ist und in der Verriegelungsstellung in eine geeignete, auf dem Aussenumfang der Innenhülse (102) des Handstütks vorgesehene Aussparung (133) eingreift, wobei eine Drehung des Rings (117) die Zunge (132) aus der Aussparung (133) zu entfernen und damit den Modul (116) vom Handstütk zu lösen erlaubt,

7. Vorrichtung nach Anspruch 4, dadurch gekennzeichnet, dass die erwähnten Mittel zur Befestigung aus wenigstens einer elastischen, nach innen verformten Zunge (135) bestehen, die radial in einem auf dem freien Ende des Rings (117') des Moduls (116) montierten Zwischenring (136) ausgeschnitten ist, und dass dieser Zwischenring (136) seinerseits an einem auf dem Modulring (117') drehbaren äusseren Ring (137) befestigt ist, derart, dass die elastische Zunge (135) in der Verriegelungsstellung durch eine Oeffnung (138) des Modulrings hindurch in eine geeignete, am Handstück vorgesehene Ausnehmung (139) eingreift und das eine Drehung des äusseren Ringes (137) auf dem Modulring die elastiche Zunge (135) aus der Ausnehmung (139) zu entfernen und damit die beiden Teile voneinander zu lösen erlaubt.

8. Vorrichtung nach einem der vorangehenden Ansprüche, dadurch gekennzeichnet, dass die kolbenartigen Kontakte (111,112) an der Vorderseite des Mikromotors (106) aus dem Boden einer ringförmigen Nut (113) herausragen, in welche die ringförmigen elektrischen Kontaktbahnen (114, 115) im gekuppelten Zustand eingreifen, und dass der den Nutboden überragende Teil der kolbenartigen Kontakte kürzer als die den Aussenumfang dieser Nut bildende Endwand ist.
